# EUROPEAN PATENT SPECIFICATION

(11) **EP 1 875 785 B1**
(45) Date of publication and mention of the grant of the patent: **11.04.2012**
(21) Application number: 06750878.8
(22) Date of filing: 20.04.2006
(51) Int. Cl.: H05H 1/34

(54) **INTERCHANGEABLE PLASMA NOZZLE INTERFACE**
AUSTAUSCHBARE PLASMADÜSENSCHNITTSTELLE
INTERFACE INTERCHANGEABLE POUR BUSE PLASMA

(30) Priority: 29.04.2005 US 675910 P; 30.03.2006 US 392650
(43) Date of publication of application: 09.01.2008
(73) Proprietor: Sulzer Metco (US) Inc., Westbury, NY 11590-0201 (US)
(72) Inventor: MOLZ, Ronald, J., Kings Park, New York 11754 (US); HAWLEY, David, Mt. Kisco, New York 10549 (US)
(74) Representative: Sulzer Management AG
(86) International application number: PCT/US2006/014962
(87) International publication number: WO 2006/118813

(56) References cited:
- US-A- 4 861 962
- US-A- 5 332 885
- US-A- 5 406 046

## Description

### BACKGROUND OF THE INVENTION

### Field of the Invention

The present invention relates generally to equipment for the thermal spraying of powdered materials, More specifically, the present invention relates to a thermal spray gun having an interface for receiving a nozzle plug according to the preamble of claim 1. The invention further relates to an interchangeable nozzle according to the preamble of claim 13. The invention also relates to a method of forming an interface according to the preamble of claim 16.

### Description of Related Art

A variety of thermal spray coatings have been used to protect various types of components. Coatings may provide various benefits such as to resist wear, retard corrosion, control clearances, salvage worn components, resist high temperatures and/or enhance electrical properties. These benefits can differ based on the coating material type and how those materials are applied. One group of spray coatings to which the subject matter of the present invention pertains in particular are those applied via the plasma spray process. This process has been used to apply many different types of coatings in numerous industries.

Each material coating specification requires a specific range of velocity and temperature transferred to the powder particle to achieve the required material properties on the part. Improved consistency and efficiency in the delivery of thermal spray coatings remains an industry-wide goal.

US-A- 5,332,885 and US-A-5,406,046 disclose a plasma spray apparatus for spraying powdery or gaseous material. The apparatus comprise an indirect plasmatron for creating an elongated plasma torch. The plasmatron comprises a cathode assembly, an annular anode member located distantly from the cathode assembly and a plasma channel extending from the cathode assembly to the anode member and having a zone with reduced diameter located in the region of the plasma torch. The plasma channel is delimited by the annular anode member as well as by a plurality of annular neutrode members which are electrically insulated from each other. US-A-4,861,962 discloses a plasma arc cutting torch having a shield mounted at its lower end adjacent a workpiece to block splattered molten metal from reaching the nozzle of the torch.

The plasma gun has been used as a process tool in the spray coatings industry due to the wide range of parameters that are achievable with this basic tool. A key element of any plasma gun is the nozzle geometry, Variations in nozzle geometry can allow a plasma gun to provide coating properties at a different temperatures and velocities from the same base equipment. When operators would need to apply a different type of spray coating, they often must use a different nozzle. Thus a single plasma gun with interchangeable nozzles can serve multiple uses and, potentially provide significant equipment costs savings over guns with a fixed nozzle geometry. Generally, prior art spray gun and nozzle configurations were not typically designed with nozzle interchangeability in mind. Prior art configurations were such that the operator would also often need to change the spray gun itself.

However, there are a number of factors that can prove challenging in replacing the a plasma gun nozzle. Plasma spray guns must perform several different functions in order to achieve a successful coating process. Those functions include proper alignment of the spray nozzle as well as sealing of the channel through which plasma gases flow, Also, cooling of the gun nozzle during the spray process is required to prevent overheating. So proper flow of coolant sealing around the nozzle area and adequate sealing of the cooling path is essential. An electrical connection between the nozzle and the plasma gun is also required to serve as the return path for the plasma arc current flow. Precise orientation of mechanical location, electrical connections and water chamber seals must be achieved to obtain the desired spray characteristics.

A standard interface for each nozzle that would assure proper orientation of all plasma gun components with each interchangeable nozzle, while minimizing the risk of human error would be beneficial to the spray coating industry. Optimal orientation could extend the range of performance for a single thermal spray plasma gun. Thus, there remains a need in the art for a standard nozzle interface for a thermal spray plasma gun that provides an optima efficient and repeatable nozzle connection for a wide range of nozzle geometries.

### SUMMARY OF THE INVENTION

The invention provides a thermal spray plasma gun having the features of claim1, an interchangeable nozzle having the features of claim 13, and a method of forming an interface having the features of claim 16.

The present invention meets the aforementioned need by providing a standard interface for providing mechanical location, mechanical orientation, electrical connections, and water chamber seals for the exchange of a variety of plasma forming nozzles each associated with a specific plasma plume characteristic. The flexibility of the nozzle attachment is improved over prior designs by providing a standard exterior nozzle configuration and nozzle clamping assembly on the plasma gun so that multiple nozzles configurations (giving different plasma flow properties) can easily be used with the same devices.

The Interface serves as a common mechanical method of mating an interchangeable nozzle to a thermal spray plasma gun body, The nozzle may be located such that the mating bores of the gun body and nozzle carrying the plasma stream line up to form a continuously aligned chamber. In the assembled configuration, water flow may be carried from the gun body, through the nozzle, and back out to a return water flow channel. Also the interface provides sufficient capability to passing an electrical current of up to 800 amps at up to 300 volts between gun body and the nozzle. The actual power through the interface will vary depending upon the specific materials to be sprayed and the desired coating characteristics.

In one embodiment of the invention, an interface for a thermal spray plasma gun and an interchangeable nozzle plug is provided. The interface includes a receptacle on the plasma gun, the receptacle fabricated at least partially from an electrically conductive material and having a face section and a first cylindrical bore extending from within said plasma gun to the face section. The nozzle plug is fabricated from an electrically conductive material and has a mating end section, a distal end section, and a second cylindrical bore extending from the mating end section to the distal end section. The interface also includes a clamping assembly on the plasma gun for mechanically securing the mating end section to the face section. When joined the mating end section and the face section align the first cylindrical bore and the second cylindrical bore so as to form a continuous passage for plasma gas to flow from the first cylindrical bore through the second cylindrical bore, form a channel for cooling liquid to flow from the plasma gun through the nozzle plug and to a return path in the plasma gun, and create an electrical contact between the plasma gun and the nozzle plug.

Another embodiment provides an interchangeable nozzle for use with a plasma gun that has a nozzle plug receptacle with a face portion and a plasma outlet. The nozzle includes a nozzle plug fabricated from an electrically conductive material and has a mating end section, a distal end section, and a cylindrical bore extending from the mating end section to the distal end section. The nozzle plug is configured for forming an interface with the plasma gun wherein the mating end section and the face portion join to align the cylindrical bore and plasma outlet forming a continuous passage for plasma gas to flow from the plasma gun through the cylindrical bore. The joining of the mating end section and the face portion also forms a channel for cooling liquid to flow from the plasma gun through the nozzle and to a return path in the plasma gun and creates an electrical contact between the plasma gun and the nozzle.

In another embodiment, a method of forming an interface between a plasma gun and interchangeable nozzle is provided. The method includes the step of providing a plasma gun having a nozzle plug receptacle and a clamping assembly, the receptacle being fabricated at least partially from an electrically conductive material, the receptacle having a face section and a first cylindrical bore extending from within said plasma gun to said face section. Another step includes providing a nozzle plug fabricated from an electrically conductive material and having a mating end section, a distal end section, and a cylindrical bore extending from the mating end section to the distal end section. The method further includes securing the mating end section to the face portion with the clamping assembly, wherein the mating end section and the face portion join to align the cylindrical bore and plasma outlet forming a passage for plasma gas to flow, forming a channel for cooling liquid to flow from the plasma gun through the nozzle plug, and creating an electrical contact between the plasma gun and the nozzle plug.

Additional features of the invention will be set forth in the description which follows, and in part will be obvious from the description, or may be learned by practice of the invention. The features of the invention may be realized and obtained by means of the instrumentalities and combinations particularly pointed out hereinafter.

### BRIEF DESCRIPTION OF THE DRAWINGS

The accompanying drawings, which are included to provide further understanding of the invention and are incorporated in and constitute a part of this specification, illustrate embodiments of the invention and together with the description serve to explain the principles of the invention. In the drawings:
FIG. 1 provides a three-dimensional perspective of a plasma gun incorporating a nozzle interface in accordance with the present invention;
FIG. 2 is a drawing of a cross-sectional view of the joined nozzle interface in accordance with an embodiment of the invention;
FIG. 3 is a drawing of a cross-sectional view of the nozzle plug interface in accordance with an embodiment of the invention;
FIG. 4A provides a perspectives showing the exit end of a nozzle plug according to one embodiment of the present invention;
FIG. 4B provides a perspective view showing the mating end of a nozzle plug according to one embodiment of the present invention;
FIG. 4C provides a front view of a nozzle plug according to one embodiment of the present invention;
FIG. 4D provides a side view of a nozzle plug according to one embodiment of the present invention; and
FIG. 5 is a drawing of a cross-sectional view of the plasma gun body interface in accordance with an embodiment of the invention.

### DETAILED DESCRIPTION OF THE INVENTION

Reference will now be made in detail to the preferred embodiments of the present invention, examples of which are illustrated in the accompanying drawings.

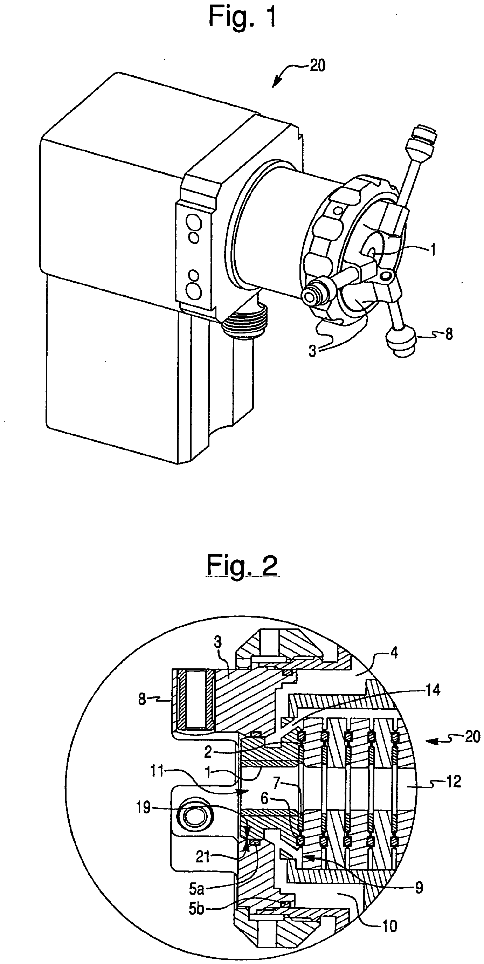

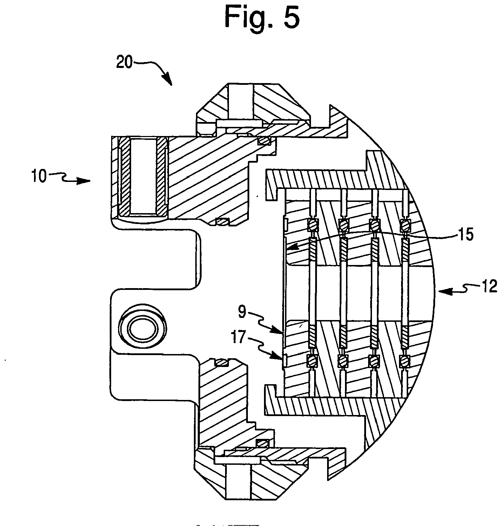

FIG. 1 provides a three-dimensional perspective of a plasma gun incorporating a nozzle interface in accordance with the present invention. Plasma gun 20 is an apparatus for spraying powdery material in a molten state, particularly for the coating of the surface of a work piece. Plasma gun 20 may be a cascaded, multiple-arc plasma gun or other plasma gun. The plasma is created by means of a torch internal to the gun 20 and guided through an internal plasma channel (shown as reference 11 in FIG. 2) to an outlet nozzle 1. The plasma gun 20 includes a receptacle assembly (reference 10, FIG. 5) to receive the nozzle 1. The nozzle 1 is secured to gun 20 at the receptacle assembly 10 by a clamping assembly 3, which will be described in greater detail with discussion of FIG. 2. The nozzle 1 is an interchangeable part and can be removed from the receptacle assembly 10 by releasing the clamping assembly 3.

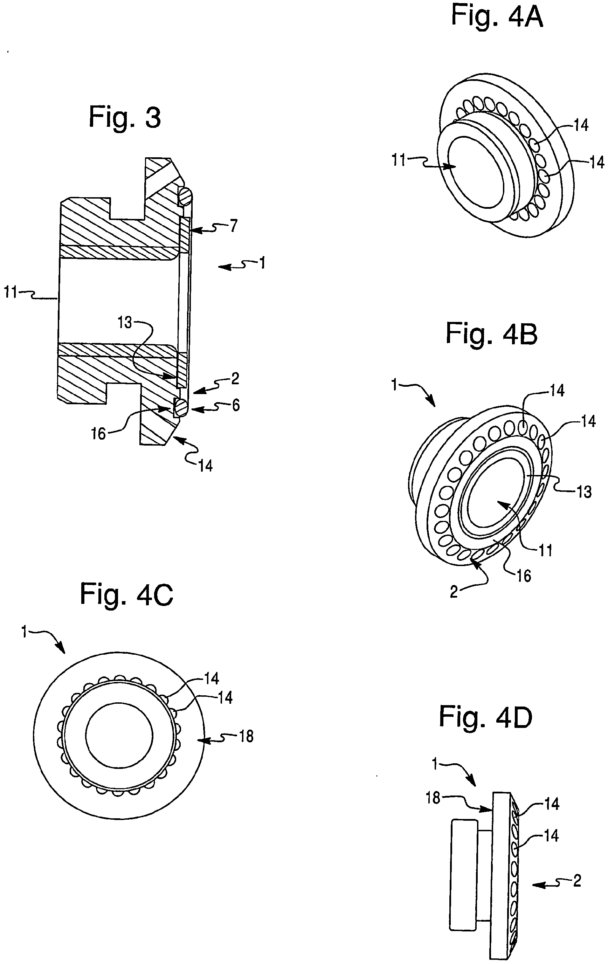

In the embodiment shown in FIG. 1, the nozzle 1 terminates before the plasma stream reaches the powder injectors 8. However, the nozzle configuration could be altered, for example, so that the powder is injected into the plasma stream within the nozzle rather than into the plasma as it exits the nozzle. Any internal nozzle configuration can be used in nozzle 1 to give different spray properties so long as the nozzle surfaces (shown, e.g., in FIG. 3 and 4A) that mate with the spray gun are compatible.

FIG. 2 shows a cross-sectional view of the joined nozzle interface of the gun 20 in accordance with an embodiment of the invention. In the interface, the nozzle plug 1 is seated in the receptacle assembly 10 of gun 20. The interface includes multiple elements with a plurality of functions. These functions include providing a mechanical containment for the nozzle 1, providing an electrical connection, providing a cooling water (or other fluid) connection, and providing a plasma gas connection. These functions are addressed more specifically in relation to the joined mechanical interface in FIG. 2.

The electrical connection is made by the mating together of a surface 21 of the nozzle plug 1 and an aligned surface 19 of clamping assembly 3. A good electrical connection is important for operation of the plasma gun, serving as the return path for the current flow generating the plasma arc. Both the nozzle plug 1 at surface 21 and the clamping assembly 10 at surface 19 are fabricated from an electrically conductive material such as, but not limited to, copper.

The interface provides a channel 4 for water or other liquid cooling media to flow into and out of the nozzle plug 1. The water in channel 4 flows from the gun 20 through holes 14 in the nozzle plug 1. The channel 4 encircles a portion of the plug 1 to allow cooling liquid to contact the exterior wall of the nozzle bore 11. Surface 2 of nozzle plug 1 and surface 9 of the receptacle assembly are held under compression by clamping assembly 3, which may be in the form of a two-piece compression nut. Although a compression nut is shown, other clamping assemblies such as latches, bolts, clamps, or a similar tensioning device could be used so long as the clamping assembly 3 is removable and supplies sufficient tension to compress a sealing o-ring 6 in the receptacle to prevent water leakage between the nozzle face 2 and the receptacle face 9. The interface should be sealed to contain the water at pressures up to approximately 300 psig (20,7 bar). The interface contains grooves on the clamping assembly 3 to serve as seats for two o-ring 5a, 5b (or equivalent) that seal the water channel.

Still referring to FIG. 2, the plasma connection is formed when the nozzle plug 1 is secured to the receptacle face 9 so that the bore 11 of the nozzle plug 1 is aligned with the plasma channel 12 of the gun 20. The plasma channel 12 and the nozzle bore 11, when joined together, form essentially a continuous path for plasma flow. The nozzle bore 11 and the plasma channel 12 should have about the same diameter at the interface, approximately 7-11mm. A single o-ring 6 or equivalent face seal is included to serve as a water (or other cooling liquid) seal for water or other cooling fluid flowing in the water channel 4 (FIG. 2) through the holes 14. In addition, a replaceable high temperature gasket 7 is used to shield the seal 6 from the radiant and high temperature exposure from the plasma gas stream and ensure electrical isolation from the electrically neutral central gun bore 12 components.

Individual details of the nozzle plug 1 are shown in FIG. 3. The nozzle plug 1 has an outer plug face 2 diameter of 1.177 inches (29.90 mm). and a depth sufficient to mechanically center the nozzle within a plasma gun body. The outer plug face 2 is dimensioned to accommodate seals and structure necessary to allow plasma gas flow and adequate cooling flow through the interface. The nozzle face 2 contains an annular groove 16 to partially seat the o-ring 6 (or equivalent) to seal the water channel 4 (FIG. 2). The groove is 0.024 inches (0.6 mm) deep and has an inner diameter of 0.787 inches (20 mm) and an outer diameter of 0.945 inches (24.00 mm). As noted above with respect to FIG. 2, a high temperature ceramic gasket 7 is used as a component of the interface. The high temperature ceramic gasket 7 has an outer diameter of 0.709 inches (18.0mm) and cross section width of 0.07 inches (1.8mm) and sits between the bore 11 and the o-ring groove 16 on the nozzle face 2. The nozzle 1 includes counter bores 13 on the nozzle face 2 that are 0.012 inches (0.3 mm) deep and have a diameter of 0.712 inches (18.0mm) that serves as a seat for the high temperature gasket 7 to protect the aforementioned seal 6 from exposure to the high temperatures associated with the plasma plume. The replaceable high temperature gasket 7 is used as a component of the interface with an outer diameter of 0.709 inches (18mm) and a width of 0.035 inches (0,9mm). The nozzle plug 1 has a bore hole of between about 0.275 to 0.433 inches (7-11 mm) in diameter at the center of the mating surface between the nozzle face 2 and the receptacle 9.

FIGS. 4A-4D provide various perspectives of the nozzle plug 1 according to one embodiment of the present invention. FIG. 4A provides a perspective view showing the distal (or exit) end of the nozzle 1. FIG. 4B provides a perspective view showing the mating end of the nozzles plug 1. FIG. 4C provides a front view of nozzles 1, and FIG. 4D provides a side view of nozzle 1. As can be seen in FIGS. 4A-4D holes 14 are included in nozzle face 2 and placed around the nozzle bore 11 to provide part of water channel 4 (FIG. 2). The nozzle face 2 contains an annular groove 16 and counter bores 13 as described above with respect to FIG. 3. When installed in the gun receptacle 10 (FIG. 2, 5), the nozzle face 2 is joined to the receptacle face 9 (FIG. 2, 5) and held in place by the compression force of clamping assembly 3 (FIG. 2) acting on surface 18 of the nozzle plug 1.

Details of the receptacle area 10 of plasma gun 20 are shown in FIG. 5. The receptacle area 10 has the face 9 diameter dimensioned to receive the nozzle face 2 (not shown), that diameter being about 1.183 inches (30.05 mm). The receptacle face 9 includes counter bores 15 that are about 0.012 Inches (0.3 mm) deep and have a diameter of 0.709 inches (18.0 mm) that serves as one side of a seat opposite that of the nozzle I (FIG. 2) for the high temperature gasket 7 (FIG. 2) to protect the seal 6 (FIG. 2) from exposure to the high temperatures associated with the plasma plume. The plasma channel 12 of the gun 20 has a bore hole of 0.275 to 0.433 inches (7-11 mm) in diameter at the center of the mating surface between the nozzle and the gun body. The receptacle face 9 contains annular grooves 17 to partially seat the o-ring 6 (FIG. 2) to seal the water channel 4 (FIG. 2). The grooves are 0.024 inches (0.6 mm) deep and have an inner diameter of 0.787 inches (20 mm) and an outer diameter of 0.945 inches (24.00 mm).

Additional advantages and modifications will readily occur to those skilled in the art. Therefore, the invention in its broader aspects is not limited to the specific details and representative embodiments shown and described herein. Accordingly, various modifications may be made without departing from the scope of the invention as defined by the appended claims.

## Claims

1. An interface for a thermal spray plasma gun (20) and an interchangeable nozzle plug (1) comprising:
a receptacle (10) on said plasma gun (20), said receptacle (10) fabricated at least partially from an electrically conductive material and having a face section (9) and a first cylindrical bore (12) extending from within said plasma gun (20) to said face section (9);
said nozzle plug (1) fabricated from an electrically conductive material and having a mating end section (2), a distal end section, and a second cylindrical bore (11) extending from said mating end section (2) to said distal end section; and
said mating end section (2) and said face section (9) are adapted to, when joined, (a) align said first cylindrical bore (12) and said second cylindrical bore (11) so as to form a continuous passage for plasma gas to flow from said first cylindrical bore (12) through said second cylindrical bore (11), (b) form a channel (4) for cooling liquid to flow from said plasma gun (20) through said nozzle plug (1) and to a return path in said plasma gun (20), and (c) create an electrical contact between said plasma gun (20) and said nozzle plug (1),
wherein
the interface is for receiving said interchangeable nozzle plug (1), and
comprises a clamping assembly (3) on said plasma gun (20) for mechanically securing said mating end section (2) to said face section (9);
**characterized in that**
the interface is configured so that the cooling liquid from said plasma gun (20) flows through said clamping assembly (3) prior to encountering said nozzle plug (1).

2. The interface of claim 1, further comprising an annular elastic seal (6) between said face section (9) and said mating end section (2) to prevent leakage of cooling liquid and/or plasma gas, wherein said receptacle face section (9) includes an annular groove (17) suitable for securing said annular elastic seal (6).

3. The interface of claim 2, further comprising an annular gasket (7) to shield said annular elastic seal (6) from exposure to the plasma gas, said annular gasket (7) having a smaller inner diameter than that of said annular elastic seal (6).

4. The interface of claim 3, further comprising at least one cooling liquid seal (5a) between said nozzle plug (1) and said clamping assembly (3) to prevent cooling liquid leakage.

5. The interface of claim 4, wherein the nozzle plug mating end section (2) is about 29.90 mm (1.177 inches) in diameter and has a depth sufficient to mechanically center the nozzle plug (1) within the receptacle (10).

6. The interface of claim 5, wherein the part of the receptacle face section (9) for receiving the nozzle plug mating end section (2) is about 30.05 mm (1.183 inches) in diameter.

7. The interface of claim 4, wherein the nozzle plug mating end section (2) and the receptacle face section (9) each contain grooves (16, 17) that are about 0.6 mm (0.024 inches) deep, said grooves (16, 17) having an inner diameter of about 20 mm (0.787 inches) and an outer diameter of about 24 mm (0.945 inches) to serve as a seat for said annular elastic seal (6).

8. The interface of claim 7, wherein said annular elastic seal (6) has an inner diameter of about 20.3 mm (0.801 inches) and cross-section width of about 1.778 mm (0.07 inches).

9. The interface of claim 4, wherein the nozzle plug mating end section (2) and the receptacle face section (9) each contain counter bores (13, 15) that are about 0.3 mm (0.012 inches) deep, said counter bores (13, 15) having an inner diameter of about 18 mm (0.712 inches) to serve as a seat for the annular gasket (7).

10. The interface of claim 9, wherein the annular gasket (7) has an outer diameter of about 18 mm (0.709 inches) and a cross-section width of about 0.9 mm (0.035 inches).

11. The interface of claim 4, wherein the first cylindrical bore (12) and the second cylindrical bore (11) are each about 7 mm (0.275 inches) to about 11 mm (0.433 inches) in diameter at the mating surface between the nozzle mating end section (2) and the receptacle face section (9).

12. The interface of claim 4, wherein the clamping assembly (3) is two-piece compression nut.

13. An interchangeable nozzle for use with a plasma gun (20) having a nozzle plug receptacle (10) with a face section (9) and a plasma outlet, said nozzle comprising:
a nozzle plug (1) fabricated from an electrically conductive material and having a mating end section (2), a distal end section, and a second cylindrical bore (11) extending from said mating end section (2) to said distal end section, said nozzle configured for forming an interface with said plasma gun (20) wherein said mating end section (2) and said face section (9) join to align said second cylindrical bore (11) and the plasma outlet forming a continuous passage for plasma gas to flow from said plasma gun (20) through said second cylindrical bore (11), and wherein joining said mating end section (2) and said face section (9) creates an electrical contact between said plasma gun (20) and said nozzle plug (1), wherein
the nozzle plug (1) is adapted for a clamping assembly (3) on said plasma gun (20) for mechanically securing said mating end section (2) to said face section (9), and **characterised by** the fact that joining said mating end section (2) and said face section (9) also forms a channel (4) for cooling liquid to flow from said plasma gun (20) through said clamping assembly (3) prior to encountering said nozzle plug (1), through said nozzle plug (1) and to a return path in said plasma gun (20).

14. The interchangeable nozzle of claim 13, wherein the mating end section (2) is about 29.90 mm (1.177 inches) in diameter and has a depth sufficient to mechanically center the nozzle plug (1) within the receptacle (10).

15. The interface of claim 13, wherein the mating end section (2) contains a groove (16) about 0.6 mm (0.024 inches) deep, said groove (16) having an inner diameter of about 20 mm (0.787 inches) and an outer diameter of about 24.00 mm (0.945 inches) to serve as a seat for an annular elastic seal (6).

16. A method of forming an interface between a plasma gun (20) and interchangeable nozzle (1), comprising:
providing a plasma gun (20) having a nozzle plug receptacle (10) and a clamping assembly (3), said receptacle (10) fabricated at least partially from an electrically conductive material, said receptacle (10) having a face section (9) and a first cylindrical bore (12) extending from within said plasma gun (20) to said face section (9);
providing a nozzle plug (1) fabricated from an electrically conductive material and having a mating end section (2), a distal end section, and
a second cylindrical bore (11) extending from said mating end section (2) to said distal end section; and said mating end section (2) and said face section (9) join to align said cylindrical bores (11, 12) and the plasma outlet forming a passage for plasma gas to flow, and creating an electrical contact between said plasma gun (20) and said nozzle plug (1) **characterized in that** the method further comprising:
securing said mating end section (2) to said face section (9) with said clamping assembly (3), forming a channel (4) for cooling liquid to flow from said plasma gun (20) through said clamping assembly (3) prior to encountering said nozzle plug (1) and through said nozzle plug (1).

17. The method of claim 16, wherein the mating end section (2) is about 29.90 mm (1.177 inches) in diameter and has a depth sufficient to mechanically center the nozzle plug (1) within the receptacle (10).

## Patentansprüche

1. Schnittstelle für eine Plasmakanone (20) zum thermischen Spritzen und einen auswechselbaren Düsenaufsatz (1), umfassend:
eine Aufnahme (10) an der Plasmakanone (20), wobei die Aufnahme (10) zumindest teilweise aus einem elektrisch leitenden Material hergestellt ist und einen Flächenabschnitt (9) und eine erste zylindrische Bohrung (12) aufweist, die sich von dem Inneren der Plasmakanone (20) zu dem Flächenabschnitt (9) erstreckt;
wobei der Düsenaufsatz (1) aus einem elektrisch leitenden Material hergestellt ist und einen Kopplungs-Endabschnitt (2), einen distalen Endabschnitt und eine zweite zylindrische Bohrung (11) aufweist, die sich von dem Kopplungs-Endabschnitt (2) zu dem distalen Endabschnitt erstreckt; und
wobei der Kopplungs-Endabschnitt (2) und der Flächenabschnitt (9) derart angepasst sind, dass sie im verbundenen Zustand (a) die erste zylindrische Bohrung (12) und die zweite zylindrische Bohrung (11) ausrichten, um so einen kontinuierlichen Durchgang für Plasmagas zur Strömung von der ersten zylindrischen Bohrung (12) durch die zweite zylindrische Bohrung (11) zu bilden, (b) einen Kanal (4) für Kühlflüssigkeit zur Strömung von der Plasmakanone (20) durch den Düsenaufsatz (1) und zu einem Rückführpfad in der Plasmakanone (20) bilden, und (c) einen elektrischen Kontakt zwischen der Plasmakanone (20) und dem Düsenaufsatz (1) erzeugen,
wobei
die Schnittstelle zur Aufnahme des auswechselbaren Düsenaufsatzes (1) dient und eine Klemmanordnung (3) an der Plasmakanone (20) zur mechanischen Befestigung des Kopplungs-Endabschnitts (2) an dem Flächenabschnitt (9) umfasst;
**dadurch gekennzeichnet, dass** die Schnittstelle derart konfiguriert ist, dass die Kühlflüssigkeit von der Plasmakanone (20) durch die Klemmanordnung (3) vor Auftreffen auf den Düsenaufsatz (1) strömt.

2. Schnittstelle nach Anspruch 1,
ferner mit einer ringförmigen elastischen Dichtung (6) zwischen dem Flächenabschnitt (9) und dem Kopplungs-Endabschnitt (2), um eine Leckage von Kühlflüssigkeit und/oder Plasmagas zu verhindern, wobei der Aufnahmeflächenabschnitt (9) eine Ringnut (17) aufweist, die zum Befestigen der ringförmigen elastischen Dichtung (6) geeignet ist.

3. Schnittstelle nach Anspruch 2,
ferner mit einem ringförmigen Dichtelement (7), um die ringförmige elastische Dichtung (6) vor einem Kontakt mit dem Plasmagas zu schützen, wobei das ringförmige Dichtelement (7) einen kleineren Innendurchmesser besitzt, als die ringförmige elastische Dichtung (6).

4. Schnittstelle nach Anspruch 3,
ferner mit zumindest einer Kühlflüssigkeitsdichtung (5a) zwischen dem Düsenaufsatz (1) und der Klemmanordnung (3), um eine Kühlflüssigkeitsleckage zu verhindern.

5. Schnittstelle nach Anspruch 4,
wobei der Durchmesser des Kopplungs-Endabschnittes (2) des Düsenaufsatzes etwa 29,90 mm (1,177 Zoll) beträgt und eine Tiefe besitzt, die ausreichend ist, dass der Düsenaufsatz (1) mechanisch in der Aufnahme (10) zentriert wird.

6. Schnittstelle nach Anspruch 5,
wobei das Teil des Aufnahmeflächenabschnitts (9) zur Aufnahme des Kopplungs-Endabschnittes (2) des Düsenaufsatzes einen Durchmesser von etwa 30,05 mm (1,183 Zoll) besitzt.

7. Schnittstelle nach Anspruch 4,
wobei der Kopplungs-Endabschnitt (2) des Düsenaufsatzes und der Aufnahmeflächenabschnitt (9) jeweils Nuten (16, 17) enthalten, die etwa 0,6 mm (0,024 Zoll) tief sind, wobei die Nuten (16, 17) einen Innendurchmesser von etwa 20 mm (0,787 Zoll) und einen Außendurchmesser von etwa 24 mm (0,945 Zoll) besitzen, um als ein Sitz für die ringförmige elastische Dichtung (6) zu dienen.

8. Schnittstelle nach Anspruch 7,
wobei die ringförmige elastische Dichtung (6) einen Innendurchmesser von etwa 20,3 mm (0,801 Zoll) und eine Querschnittsbreite von 1,778 mm (0,07 Zoll) besitzt.

9. Schnittstelle nach Anspruch 4,
wobei der Kopplungs-Endabschnitt (2) des Düsenaufsatzes und der Aufnahmeflächenabschnitt (9) jeweils Gegenbohrungen (13, 15) enthalten, die etwa 0,3 mm (0,012 Zoll) tief sind, wobei die Gegenbohrungen (13, 15) einen Innendurchmesser von etwa 18 mm (0,712 Zoll) besitzen, um als ein Sitz für das ringförmige Dichtelement (7) zu dienen.

10. Schnittstelle nach Anspruch 9,
wobei das ringförmige Dichtelement (7) einen Außendurchmesser von etwa 18 mm (0,709 Zoll) und eine Querschnittsbreite von etwa 0,9 mm (0,035 Zoll) besitzt.

11. Schnittstelle nach Anspruch 4,
wobei die erste zylindrische Bohrung (12) und die zweite zylindrische Bohrung (11) jeweils einen Durchmesser von etwa 7 mm (0,275 Zoll) bis etwa 11 mm (0,433 Zoll) an der Kopplungsfläche zwischen dem Kopplungs-Endabschnitt (2) der Düse und dem Aufnahmeflächenabschnitt (9) besitzen.

12. Schnittstelle nach Anspruch 4,
wobei die Klemmanordnung (3) eine zweiteilige Kompressionsmutter ist.

13. Austauschbare Düse zur Verwendung mit einer Plasmakanone (20), die eine Düsenaufsatzaufnahme (10) mit einem Flächenabschnitt (9) und einem Plasmaauslass besitzt, wobei die Düse umfasst:
einen Düsenaufsatz (1), der aus einem elektrisch leitenden Material hergestellt ist und einen Kopplungs-Endabschnitt (2), einen distalen Endabschnitt und eine zweite zylindrische Bohrung (11) besitzt, die sich von dem Kopplungs-Endabschnitt (2) zu dem distalen Endabschnitt erstreckt, wobei die Düse zur Bildung einer Schnittstelle mit der Plasmakanone (20) konfiguriert ist, wobei der Kopplungs-Endabschnitt (2) und der Flächenabschnitt (9) verbunden sind, um die zweite zylindrische Bohrung (11) und den Plasmaauslass auszurichten, wobei ein kontinuierlicher Durchgang für Plasmagas zur Strömung von der Plasmakanone (20) durch die zweite zylindrische Bohrung (11) gebildet wird, und wobei das Verbinden des Kopplungs-Endabschnittes (2) und des Flächenabschnittes (9) einen elektrischen Kontakt zwischen der Plasmakanone (20) und dem Düsenaufsatz (1) erzeugt, wobei der Düsenaufsatz (1) für eine Klemmanordnung (3) an der Plasmakanone (20) zur mechanischen Befestigung des Kopplungs-Endabschnittes (2) an dem Flächenabschnitt (9) angepasst ist, und **gekennzeichnet durch** die Tatsache, dass ein Verbinden des Kopplungs-Endabschnittes (2) und des Flächenabschnittes (9) auch einen Kanal (4) für Kühlflüssigkeit zur Strömung von der Plasmakanone (20) **durch** die Klemmanordnung (3) vor einem Auftreffen auf den Düsenaufsatz (1), **durch** den Düsenaufsatz (1) und zu einem Rückkehrpfad in der Plasmakanone (20) bildet.

14. Austauschbare Düse nach Anspruch 13,
wobei der Kopplungs-Endabschnitt (2) einen Durchmesser von etwa 29,90 mm (1,177 Zoll) besitzt und eine Tiefe aufweist, die ausreichend ist, dass der Düsenaufsatz (1) mechanisch in der Aufnahme (10) zentriert wird.

15. Schnittstelle nach Anspruch 13,
wobei der Kopplungs-Endabschnitt (2) eine Nut (16) etwa 0,6 mm (0,024 Zoll) tief enthält, wobei die Nut (16) einen Innendurchmesser von etwa 20 mm (0,787 Zoll) und einen Außendurchmesser von etwa 24,00 mm (0,945 Zoll) besitzt, um als ein Sitz für eine ringförmige elastische Dichtung (6) zu dienen.

16. Verfahren zum Formen einer Schnittstelle zwischen einer Plasmakanone (20) und einer austauschbaren Düse (1), umfassend:
Bereitstellen einer Plasmakanone (20) mit einer Düsenaufsatzaufnahme (10) und einer Klemmanordnung (3), wobei die Aufnahme (10) zumindest teilweise aus einem elektrisch leitenden Material hergestellt ist, wobei die Aufnahme (10) einen Flächenabschnitt (9) und eine erste zylindrische Bohrung (12) besitzt, die sich aus einem Inneren der Plasmakanone (20) zu dem Flächenabschnitt (9) erstreckt;
Bereitstellen eines Düsenaufsatzes (1), der aus einem elektrisch leitenden Material hergestellt ist und einen Kopplungs-Endabschnitt (2), einen distalen Endabschnitt und eine zweite zylindrische Bohrung (11) besitzt, die sich von dem Kopplungs-Endabschnitt (2) zu dem distalen Endabschnitt erstreckt; und wobei der Kopplungs-Endabschnitt (2) und der Flächenabschnitt (9) verbunden sind, um die zylindrischen Bohrungen (11, 12) und den Plasmaauslass auszurichten, wobei ein Durchgang für ein Plasmagas zur Strömung gebildet und ein elektrischer Kontakt zwischen der Plasmakanone (20) und dem Düsenaufsatz (1) erzeugt werden,
**dadurch gekennzeichnet, dass** das Verfahren ferner umfasst:
Befestigen des Kopplungs-Endabschnittes (2) an dem Flächenabschnitt (9) mit der Klemmanordnung (3), wobei ein Kanal (4) für Kühlfluid zur Strömung von der Plasmakanone (20) durch die Klemmanordnung (3) vor Auftreffen auf den Düsenaufsatz (1) und durch den Düsenaufsatz (1) gebildet wird.

17. Verfahren nach Anspruch 16,
wobei der Kopplungs-Endabschnitt (2) einen Durchmesser von etwa 29,90 mm (1,177 Zoll) besitzt und eine Tiefe aufweist, die ausreichend ist, dass der Düsenaufsatz (1) mechanisch in der Aufnahme (10) zentriert wird.

## Revendications

1. Interface pour un pistolet à plasma de pulvérisation thermique (20) et un bouchon de buse interchangeable, **caractérisée par le fait qu'**elle comprend:
un réceptacle (10) sur ledit pistolet à plasma (20), ledit réceptacle (10) étant fabriqué au moins partiellement en un matériau électriquement conducteur et ayant une section de face (9) et un premier perçage cylindrique (12) s'étendant depuis ledit pistolet à plasma (20) à ladite section de face (9);
ledit bouchon de buse (1) étant fabriqué en un matériau électriquement conducteur et ayant une section d'extrémité correspondante (2), une section d'extrémité distale et un deuxième perçage cylindrique (11) s'étendant depuis ladite section d'extrémité correspondante (2) à ladite section d'extrémité distale; et
ladite section d'extrémité correspondante (2) et ladite section de face (9), lorsqu'elles sont reliées, sont aptes à (a) aligner ledit premier perçage cylindrique (12) et ledit deuxième perçage cylindrique (11) de manière à former un passage continu pour que le gaz plasma s'écoule du premier perçage cylindrique (12) à travers ledit deuxième perçage cylindrique (11), (b) former un canal (4) pour l'écoulement du liquide de refroidissement dudit pistolet à plasma (20) à travers ledit bouchon de buse (1) et dans un chemin de retour dans ledit pistolet à plasma (20), et (c) créer un contact électrique entre ledit pistolet à plasma (20) et ledit bouchon de buse (1),
où
l'interface est destinée à recevoir ledit bouchon de buse interchangeable (1), et comprend un ensemble de serrage (3) sur ledit pistolet à plasma (20) pour fixer mécaniquement ladite section d'extrémité correspondante (2) à ladite section de face (9);
**caractérisée en ce que** l'interface est configurée de façon que le liquide de refroidissement dudit pistolet à plasma (20) s'écoule à travers ledit ensemble de serrage (3) avant de rencontrer ledit bouchon de buse (1).

2. Interface selon la revendication 1, comprenant en outre un joint élastique annulaire (6) entre ladite section de face (9) et ladite section d'extrémité correspondante (2) pour empêcher une fuite du liquide de refroidissement et/ou du gaz plasma, où ladite section de face de réceptacle (9) comprend une rainure annulaire (17) apte à immobiliser ledit joint élastique annulaire (6).

3. Interface selon la revendication 2, comprenant en outre un joint d'étanchéité annulaire (7) pour protéger ledit joint élastique annulaire (6) contre l'exposition au gaz du plasma, ledit joint d'étanchéité annulaire (7) ayant un plus petit diamètre intérieur que celui dudit joint élastique annulaire (6).

4. Interface selon la revendication 3, comprenant en outre au moins un joint de liquide de refroidissement (5a) entre ledit bouchon de buse (1) et ledit ensemble de serrage (3) pour empêcher une fuite du liquide de refroidissement.

5. Interface selon la revendication 4, où la section d'extrémité correspondante (2) du bouchon de buse a un diamètre d'environ 29,90 mm (1,177 pouces) et une profondeur suffisante pour centrer mécaniquement le bouchon a buse (1) dans le réceptacle (10).

6. Interface selon la revendication 5, où la partie de la section de face de réceptacle (9) pour recevoir la section d'extrémité correspondante (2) du bouchon de buse a un diamètre d'environ 30,05 mm (1,183 pouces).

7. Interface selon la revendication 4, où la section d'extrémité correspondante (2) du bouchon de buse et la section de face de réceptacle (9) contiennent chacune des rainures (16, 17) qui ont une profondeur d'environ 0,6 mm (0,024 pouce), lesdites rainures (16, 17) ayant un diamètre intérieur d'environ 20 mm (0,787 pouce) et un diamètre extérieur d'environ 24 mm (0,945 pouce) pour servir de siège audit joint élastique annulaire (6).

8. Interface selon la revendication 7, où ledit joint élastique annulaire (6) a un diamètre intérieur d'environ 20,3 mm (0,801 pouce) et une largeur en section transversale d'environ 1,778 mm (0,07 pouce).

9. Interface selon la revendication 4, où la section d'extrémité correspondante (2) du bouchon de buse et la section de face de réceptacle (9) contiennent chacune des logements cylindriques (13, 15) d'une profondeur d'environ 0,3 mm (0,012 pouce), lesdits logements cylindriques (13, 15) ayant un diamètre intérieur d'environ 18 mm (0,712 pouce) pour servir de siège au joint d'étanchéité annulaire (7).

10. Interface selon la revendication 9, où le joint d'étanchéité annulaire (7) a un diamètre extérieur d'environ 18 mm (0,709 pouce) et une largeur en section transversale d'environ 0,9 mm (0,035 pouce).

11. Interface selon la revendication 4, où le premier perçage cylindrique (12) et le deuxième perçage cylindrique (11) ont chacun un diamètre d'environ 7 mm (0,275 pouce) à environ 11 mm (0,433 pouce) à la surface de correspondance entre la section d'extrémité correspondante de buse (2) et la section de face de réceptacle (9).

12. Interface selon la revendication 4, où l'ensemble de serrage (3) est un écrou de compression en deux pièces.

13. Buse interchangeable pour utilisation avec un pistolet à plasma (20) ayant un réceptacle de bouchon de buse (10) avec une section de face (9) et une sortie de plasma, ladite buse comprenant:
un bouchon de buse (1) fabriqué en un matériau électriquement conducteur et ayant une section d'extrémité de correspondance (2), une section d'extrémité distale et un deuxième perçage cylindrique (11) s'étendant depuis ladite section d'extrémité de correspondance (2) à ladite section d'extrémité distale, ladite buse étant configurée pour former une interface avec ledit pistolet à plasma (20), où ladite section d'extrémité de correspondance (2) et ladite section de face (9) se joignent pour aligner ledit deuxième perçage cylindrique (11) et la sortie de plasma en formant un passage continu pour l'écoulement du gaz plasma dudit pistolet à plasma (20) à travers ledit deuxième perçage cylindrique (11), et où la jonction de ladite section d'extrémité de correspondance (2) et de ladite section de face (9) crée un contact électrique entre ledit pistolet à plasma (20) et ledit bouchon de buse (1), où
le bouchon de buse est **caractérisé par le fait qu'**il est adapté à un ensemble de serrage (3) sur ledit pistolet à plasma (20) pour fixer mécaniquement ladite section d'extrémité de correspondance (2) à ladite section de face (9), et **caractérisé par le fait que** la jonction de ladite section d'extrémité de correspondance (2) et de ladite section de face (9) forme également un canal (4) pour l'écoulement du liquide de refroidissement dudit pistolet à plasma (20) à travers ledit ensemble de serrage (3) avant de rencontrer ledit bouchon de buse (1) à travers ledit bouchon de buse (1) et dans un chemin de retour dans ledit pistolet à plasma (20).

14. Buse interchangeable selon la revendication 13, dans laquelle la section d'extrémité de correspondance (2) a un diamètre d'environ 29,90 mm (1,177 pouces) et une profondeur suffisante pour centrer mécaniquement le bouchon de buse (1) dans le réceptacle (10).

15. Interface selon la revendication 13, dans laquelle la section d'extrémité de correspondance (2) contient une rainure (16) d'une profondeur d'environ 0,6 mm (0,024 pouce), ladite rainure (16) ayant un diamètre intérieur d'environ 20 mm (0,787 pouce) et un diamètre extérieur d'environ 24,00 mm (0,945 pouce) pour servir de siège à un joint élastique annulaire (6).

16. Procédé de formation d'une interface entre un pistolet à plasma (20) et une buse interchangeable (1), comprenant:
réaliser un pistolet à plasma (20) ayant un réceptacle de bouchon de buse (10) et un ensemble de serrage (3), ledit réceptacle (10) étant fabriqué au moins partiellement en un matériau électriquement conducteur, ledit réceptacle (10) ayant une section de face (9) et un premier perçage cylindrique (12) s'étendant depuis l'intérieur dudit pistolet à plasma (20) à ladite section de face (9);
réaliser un bouchon de buse (1) fabriqué à partir d'un matériau électriquement conducteur et comportant une section d'extrémité de correspondance (2), une section d'extrémité distale et un deuxième perçage cylindrique (11) s'étendant depuis ladite section d'extrémité de correspondance (2) à ladite section d'extrémité distale; et ladite section d'extrémité de correspondance (2) et ladite section de face (9) se rejoignent pour aligner lesdits perçages cylindriques (11, 12) et la sortie de plasma formant un passage pour l'écoulement du gaz plasma et créant un contact électrique entre ledit pistolet à plasma (20) et ledit bouchon de buse (1)
**caractérisé en ce que** le procédé comprend en outre:
fixer ladite section d'extrémité de correspondance (2) à ladite section de face (9) avec ledit ensemble de serrage (3), en formant un canal (4) pour l'écoulement du liquide de refroidissement dudit pistolet à plasma (20) à travers ledit ensemble de serrage (3) avant de rencontrer ledit bouchon de buse (1) et à travers ledit bouchon de buse (1).

17. Procédé selon la revendication 16, dans lequel la section d'extrémité de correspondance (2) a un diamètre d'environ 29,90 mm (1,177 pouce) et une profondeur suffisante pour centrer mécaniquement le bouchon de buse (1) dans le réceptacle (10).
